# EUROPÄISCHE PATENTANMELDUNG

(11) **EP 1 850 049 A2**
(43) Veröffentlichungstag der Anmeldung: **31.10.2007**
(21) Anmeldenummer: 07006468.8
(22) Anmeldetag: 29.03.2007
(51) Int. Cl.: F16L 27/02, F16L 37/14

(54) **Verbindungsanordnung und Arretierung für eine Verbindungsanordnung**

(30) Priorität: 28.04.2006 DE 102006019776
(71) Anmelder: LuK Lamellen und Kupplungsbau Beteiligungs KG, 77815 Bühl (DE)
(72) Erfinder: Haas, Wolfgang, 77815 Bühl (DE); Frison, Dominique, 67160 Seebach (FR); Ort, Konstantin, 76133 Karlsruhe (DE); Christiaens, Yannick, 45470 Loury (FR)

(57) **Zusammenfassung**

Es wird eine Verbindungsanordnung mit zumindest einem ersten Verbindungselement (1) zum Aufnehmen zumindest eines zweiten korrespondierenden Verbindungselements (2) und mit einer Arretierung (4) zum Befestigen der beiden Verbindungselemente vorgeschlagen, wobei die miteinander verbundenen Verbindungselemente (1,2) jeweils einen bezogen auf die gemeinsame Verbindungsachse etwa kegelförmigen Bewegungsbereich aufweisen. Ferner wird eine Arretierung zum Befestigen von Verbindungselementen einer Verbindungsanordnung mit einer Halteklammer mit zwei korrespondierenden elastisch verformbaren Klemmschenkeln (5,6) vorgeschlagen, die in eine bezogen auf die Verbindungsachse radial verlaufende Einschieböffnung (8) des ersten Verbindungselements (1) einschiebbar sind, um das in dem ersten Verbindungselement (1) aufgenommene zweite Verbindungselement (2) zum axialen Fixieren zumindest abschnittsweise zu hintergreifen. Die Halteklammer ist als Drahtformfeder ausgebildet und derart geformt, dass eine möglichst geringe Kraft zum Spreizen der Klemmschenkel erforderlich ist.

## Beschreibung

Die vorliegende Erfindung betrifft eine Verbindungsanordnung mit zumindest einem ersten Verbindungselement zum Aufnehmen zumindest eines zweiten korrespondierenden Verbindungselements und mit einer Arretierung zum Befestigen der beiden Verbindungselemente. Ferner betrifft die vorliegende Erfindung eine Arretierung zum Befestigen von Verbindungselementen einer Verbindungsanordnung, mit einer Halteklammer mit zwei korrespondierenden elastisch verformbaren Klemmschenkeln, die in eine bezogen auf die Verbindungsachse radial verlaufende Einschiebeöffnung des ersten Verbindungselements einschiebbar sind, um das in dem ersten Verbindungselement aufgenommene zweite Verbindungselement zum axialen Fixieren zumindest abschnittsweise zu hintergreifen.

Beispielsweise sind Steckverbindungsanordnungen bzw. Schnellverbindungsanordnungen bekannt. Diese Verbindungsanordnungen werden zum Verbinden von Flüssigkeitsleitungen, z. B. beim Fahrzeugbau oder bei anderen industriellen Anwendungen, eingesetzt. Eine bekannte Schnellverbindungsanordnung besteht aus einem ersten Verbindungselement und einem zweiten Verbindungselement, welche dichtend miteinander mittels eines Halteelements verbunden werden. Das erste Verbindungselement ist als Anschlussbuchse und das zweite Verbindungselement als Anschlussstutzen ausgebildet. Die Anschlussbuchse nimmt das als Anschlussstutzen ausgebildete zweite Verbindungselement auf, um eine Verbindung zwischen zwei Druckleitungen eines hydraulischen Systems zu gewährleisten. Dazu bilden die Anschlussbuchse und der Anschlussstutzen jeweils ein Ende der miteinander zu verbindenden Druckleitungen. Um eine abgedichtete Verbindung zwischen den beiden Komponenten zu realisieren, ist ein Dichtelement zwischen dem Anschlussstutzen und der Anschlussbuchse vorgesehen. Um die beiden miteinander verbundenen Verbindungskomponenten aneinander zu arretieren, wird eine Arretierung an dem Anschlussstutzen verrastet, so dass der Anschlussstutzen an der Anschlussbuchse befestigt wird.

Ein entscheidender Nachteil bei der bekannten Verbindungsanordnung liegt darin, dass die miteinander verbundenen Verbindungselemente starr bezogen auf ihre gemeinsame Verbindungsachse verbunden sind, so dass keine Bewegungsmöglichkeit der Verbindungselemente z. B. zueinander gegeben ist. Somit wird eine starre Verbindung mit der bekannten Verbindungsanordnung realisiert. Des Weiteren hat sich in nachteiliger Weise gezeigt, dass zum Arretieren der Verbindungsanordnung eine erhebliche Montagekraft erforderlich ist.

Demnach liegt der vorliegenden Erfindung die Aufgabe zugrunde, eine Verbindungsanordnung der eingangs genannten Gattung vorzuschlagen, bei der die genannten Nachteile vermieden werden.

Demnach wird eine Verbindungsanordnung mit zumindest einem ersten Verbindungselement zum Aufnehmen zumindest eines zweiten korrespondierenden Verbindungselements und mit einer Arretierung zum Befestigen der beiden Verbindungselemente vorgeschlagen, bei der die miteinander verbundenen Verbindungselemente jeweils einen bezogen auf die gemeinsame Verbindungsachse etwa kegelförmigen Bewegungsbereich aufweisen. Somit sind die miteinander verbundenen Verbindungselemente der erfindungsgemäßen Verbindungsanordnung derart beweglich, dass z. B. eine nachträgliche Ausrichtung der Verbindungselemente je nach Bedarf erfolgen kann. Beispielsweise kann somit bei der erfindungsgemäßen Verbindungsanordnung eine nachträgliche Ausrichtung zum Einstellen eines gewünschten Verbindungsachsenwinkels erfolgen. Dadurch wird das Einsatzgebiet der erfindungsgemäßen Verbindungsanordnung erweitert und zudem können Herstellungskosten sowie Montagezeiten in Folge der erhöhten Flexibilität der erfindungsgemäßen Verbindungsanordnung erheblich reduziert werden. Durch die erhöhte Flexibilität und der damit verbundenen erweiterten Funktionalität der Verbindungsanordnung können ferner erforderliche Abmessungen verringert und mögliche Einbaugeometrien erweitert werden.

Im Rahmen einer besonders vorteilhaften Ausführungsform der vorliegenden Erfindung kann vorgesehen sein, dass das erste Verbindungselement einen etwa als Gelenkpfanne oder dergleichen ausgebildeten Aufnahmebereich für das zweite Verbindungselement umfasst und das zweite Verbindungselement im Wesentlichen eine etwa kugelkopfartige Form oder dergleichen aufweist. Infolgedessen wird eine kugelgelenkartige Verbindung zwischen den beiden Verbindungselementen der Verbindungsanordnung auf einfachste Weise realisiert. Durch die kugelförmige Verbindungsfläche zwischen den beiden Verbindungselementen wird der flexible Bewegungsbereich der erfindungsgemäßen Verbindungsanordnung ermöglicht, so dass die genannten Vorteile hinsichtlich des flexiblen Einsatzbereiches und der möglichen Korrektur von Ausrichtfehlern bei geschlossener Verbindung auf einfachste Weise realisierbar sind.

Eine mögliche Ausführungsform der Erfindung kann dadurch realisiert werden, dass die kugelkopfartige Form zumindest einen ersten vorbestimmten Radius aufweist, der an den Innenradius der Gelenkpfanne angepasst ist. Auf diese Weise ist eine spielfreie Lagerung zwischen den beiden Verbindungselementen der erfindungsgemäßen Verbindungsanordnung ermöglicht.

Vorzugsweise hat die kugelkopfartige Form des zweiten Verbindungselements einen zweiten Radius, der zumindest geringfügig kleiner als der erste Radius ist. Somit wird die kugelkopfartige Form z. B. durch zwei aneinander gefügte Halbkugelabschnitte mit unterschiedlichen Radien gebildet. Es ist möglich, dass die beiden Halbkugeln auch andere Formen aufweisen, jedoch hat sich gezeigt, dass eine Halbkugelform jedes Abschnittes günstig ist, um einerseits eine Verbindungsfläche und andererseits eine Arretierung der Verbindungselemente auf konstruktiv einfachste Weise zu realisieren.

Dadurch dass die kugelkopfartige Form durch Halbkugelabschnitte mit unterschiedlichen Radien gebildet wird, kann ein Durchmesserabsatz zwischen dem ersten Radius und dem zweiten Radius als umlaufender Anschlag zum Begrenzen des Bewegungsbereiches der verbundenen Verbindungselemente realisiert werden. Es sind auch andere Begrenzungsmöglichkeiten bei der erfindungsgemäßen Verbindungsanordnung möglich.

Gemäß einer nächsten Weiterbildung kann die erfindungsgemäße Verbindungsanordnung beispielsweise bei hydraulischen Betätigungssystemen oder dergleichen eingesetzt werden. Bei dieser Art der Verwendung kann das zweite Verbindungselement als Anschlussstutzen einer Druckleitung ausgebildet sein. Der Anschlussstutzen kann mit einem Ende der Druckleitung verbunden werden und eine Durchgangsbohrung zum Fluidtransport aufweisen. Vorzugsweise kann der Anschlussstutzen einen Grundkörper aufweisen, der das Ende der Druckleitung aufnehmen kann. An dem freien Ende des Grundkörpers kann dann z. B. die vorbeschriebene kugelkopfartige Form vorgesehen sein.

Eine nächste Weiterbildung bei dieser Ausführungsform kann vorsehen, dass der Anschlussstutzen mit seiner kugelkopfartigen Form von einer als erstes Verbindungselement ausgebildeten Anschlussbuchse oder dergleichen zum Beispiel eines Hydraulikzylinders aufgenommen werden kann. Auf diese Weise wird die Druckleitung mit einem Hydraulikzylinder, wie zum Beispiel einem Geberzylinder oder einem Nehmerzylinder eines hydraulischen Betätigungssystems für eine Kupplung eines Fahrzeuges, verbunden.

Um diese Verbindungsanordnung ausreichend abzudichten, kann die kugelkopfartige Form eine umlaufende Nut oder dergleichen zur Aufnahme eines Dichtungselements aufweisen. Als Dichtungselement kann zum Beispiel ein O-Ring oder auch ein anderes Dichtungselement, wie zum Beispiel eine Dichtungslippe oder auch eine anders geformte Dichtung verwendet werden. Durch die Verwendung eines geeigneten Dichtungselements kann die erfindungsgemäße Anordnung sowohl für Hochdruck- als auch Niederdruckleitungen verwendet werden.

Eine andere Einsatzmöglichkeit der Verbindungsanordnung ist z. B. die Verwendung als Verbindung zwischen einem Kolben und einer Kolbenstange eines Arbeitszylinders einer Brennkraftmaschine. Die bei einem Kolben-Kolbenstangensystem erforderliche Umwandlung der translatorischen Bewegung in eine rotatorische Bewegung erfordert gewisse Freiheitsgrade bezogen auf den Bewegungsbereich. Diese Freiheitsgrade sind durch die erfindungsgemäße Verbindungsanordnung realisierbar. Bei dieser Art des Einsatzes der Verbindungsanordnung wird keine Bohrung zum Fluidtransport benötigt, so dass im Unterschied zu der vorbeschriebenen Verwendung die Verbindungselemente z. B. massiv ausgebildet sind. An dem beschriebenen Verbindungsprinzip ändert dies jedoch nichts.

Unabhängig von dem jeweiligen Einsatzbereich der erfindungsgemäßen Verbindungsanordnung wird im Rahmen einer nächsten Weiterbildung der vorliegenden Erfindung vorgeschlagen, dass als Arretierung eine als Halteblech ausgebildete Halteklammer zur axialen Befestigung der Verbindungselemente vorgesehen ist. Durch die Halteklammer können die beiden verbundenen Verbindungselemente der erfindungsgemäßen Verbindungsanordnung in ihrer Position axial befestigt werden.

Vorzugsweise kann die Halteklammer als Arretierung bei der vorgeschlagenen Verbindungsanordnung in einer bezogen auf die Verbindungsachse radial verlaufende Einschiebeöffnung des ersten Verbindungselements eingeschoben werden. Auf diese Weise kann die z. B. mit zwei korrespondierenden elastisch verformbaren Klemmschenkeln ausgebildete Halteklammer das in dem ersten Verbindungselement aufgenommene zweite Verbindungselement zum axialen Fixieren zumindest abschnittsweise hintergreifen.

Eine nächste Weiterbildung der Erfindung kann vorsehen, dass zwischen der Basis und den Klemmschenkeln der Halteklammer eine im Wesentlichen kreisförmige Ausnehmung oder dergleichen vorgesehen ist. Die Ausnehmung weist einen Durchmesser auf, der an den Durchmesser der kugelkopfartigen Form, insbesondere im Bereich des zweiten Radius des zweiten Verbindungselements, angepasst ist. Zudem ist der Rand der Ausnehmung mit einem Radius versehen, der an die Umfangsform der kugelkopfartigen Form des zweiten Verbindungselements angepasst ist. Auf diese Weise kann die Halteklammer mit ihren Klemmschenkeln an der Umfangsform der kugelartigen Form anliegen, so dass der Bewegungsbereich der erfindungsgemäßen Verbindungsanordnung durch den Rand der Ausnehmung und dem umlaufenden Durchmesserabsatz als Anschlag begrenzt wird. Es sind jedoch auch andere Arretierungsmöglichkeiten denkbar, jedoch dient die vorbeschriebene Arretierungsmöglichkeit zusätzlich als Begrenzung für den Bewegungsbereich der erfindungsgemäßen Verbindungsanordnung.

Die der Erfindung zugrunde liegende Aufgabe wird auch durch eine Arretierung zum Befestigen von Verbindungselementen einer Verbindungsanordnung, insbesondere einer Verbindungsanordnung, wie sie oben beschrieben worden ist, gelöst, wobei die Arretierung eine Halteklammer mit zwei korrespondierenden elastisch verformbaren Klemmschenkeln umfasst, die in eine bezogen auf die Verbindungsachse radial verlaufende Einschiebeöffnung des ersten Verbindungselements einschiebbar sind, um das in dem ersten Verbindungselement aufgenommene zweite Verbindungselement zumindest abschnittsweise zur axialen Fixierung zu hintergreifen. Erfindungsgemäß zeichnet sich die Arretierung dadurch aus, dass die Halteklammer als Drahtformfeder ausgebildet und derart geformt ist, dass eine möglichst geringe Kraft zum Spreizen der Klemmschenkel erforderlich ist.

Die vorgeschlagene Arretierung kann bei beliebigen Verbindungsanordnungen, welche zwei axial zu fixierende Verbindungselemente umfasst, eingesetzt werden. Ein Einsatz der Arretierung bei der vorbeschriebenen Verbindungsanordnung ist ebenfalls möglich.

Im Rahmen einer bevorzugten Ausführungsform der vorliegenden Erfindung kann vorgesehen sein, dass der den Klemmschenkeln abgewandte Endbereich der Halteklammer geeignet abgewinkelt ist. Durch die Abwinklung zumindest des Endbereiches der Halteklammer kann nicht nur die Verformungslänge der Drahtformfeder als reines Biegeelement verlängert werden, sondern es kann zusätzlich ein torsionsbelasteter Verformungsanteil an der Drahtformfeder realisiert werden. Durch diese Maßnahme kann die Spreizkraft zum Aufspreizen der Klemmschenkel auf ein erforderliches Maß abgesenkt werden. Ein weiterer Vorteil der Abwinklung liegt darin, dass die Halteklammer nicht über den äußeren Umfang des Verbindungselementes hinausragen kann. Dadurch wird auch eine Verliersicherung ermöglicht, so dass ein unbeabsichtigtes Lösen der Halteklammer vermieden werden kann.

Besonders bevorzugt ist eine Abwinklung in einem rechten Winkel. Es sind aber auch andere Winkel möglich, in denen der Endbereich der Halteklammer abgewinkelt wird. Bei einer rechtwinkligen Abwinklung kann der Endbereich im eingeschobenen Zustand der Halteklammer in einer Vertiefung am Umfang des ersten Verbindungselements vorgesehen sein. Es sind auch andere Anordnungsmöglichkeiten denkbar, jedoch hat sich diese Art der Einbettung des abgewinkelten Endbereiches als besonders vorteilhaft erwiesen.

Es gibt verschiedene Möglichkeiten die Vertiefung am Umfang des ersten Verbindungselements vorzusehen. Beispielsweise kann eine Art Gehäuseaufbau an dem z. B. als Anschlussbuchse ausgebildeten ersten Verbindungselement vorgesehen werden. In diesen Gehäuseaufbau kann dann die Vertiefung eingelassen werden. Es ist aber auch denkbar, dass die Vertiefung einfach in den vorhandenen Umfangsbereich eingelassen wird.

Die Vertiefung ist vorzugsweise im Bereich der Einschiebeöffnung am Umfang des Verbindungselements angeordnet. Beispielsweise ist es möglich, dass die Vertiefung an der Seite der Einschiebeöffnung vorgesehen ist, die dem zweiten Verbindungselement zugewandt ist. Es ist aber auch möglich, die Vertiefung auf der anderen Seite anzuordnen.

Um eine besonders funktionelle Verliersicherung zu gestalten, kann vorgesehen sein, dass die Vertiefung als eine an die Form des Endbereiches angepasste etwa U-förmige verlaufende Nut ausgebildet ist. In dieser Nut kann der abgewinkelte Endbereich der Halteklammer quasi eingepresst werden, so dass ein unbeabsichtigtes Lösen verhindert wird. Um das Lösen der Arretierung zu vereinfachen, kann vorgesehen sein, dass ein benachbarter Bereich der Vertiefung eine geeignete Aussparung aufweist, durch die die Halteklammer wieder einfach entnommen werden kann, um diese aus der Einschiebeöffnung herauszuziehen, um die Verbindungselemente voneinander zu lösen.

Eine mögliche konstruktive Ausführung der Klemmschenkel der Halteklammer wird dadurch erreicht, dass die Klemmschenkel an die Umfangsform des zweiten, zu hintergreifenden Verbindungselements angeformt sind. Beispielsweise können die Klemmschenkel eine etwa wellenförmige oder dergleichen Ausgestaltung aufweisen. Es sind auch andere Formen denkbar.

Vorzugsweise können bei der Halteklammer die freien Enden jedes Klemmschenkels abgewinkelt sein. Es ist zum Beispiel möglich, dass die freien Enden der Klemmschenkel in einem rechten Winkel abgewinkelt sind. Es sind aber auch andere Winkel möglich. Denkbar ist es auch, dass die abgewinkelten freien Enden etwa parallel zu dem abgewinkelten Endbereich der Halteklammer ausgerichtet sind, aber es sind auch andere Ausrichtungen möglich. Beispielsweise können die freien Enden der Klemmschenkel einander zugewandt sein. Aber es ist auch denkbar, dass sie einander abgewandt sind.

Eine weitere Ausführungsform der vorliegenden Erfindung kann vorsehen, dass zum Verlängern der Biegelänge der Drahtformfeder eine spezielle Ausgestaltung der Klemmschenkel der Halteklammern vorgesehen ist. Beispielsweise können die Klemmschenkel mehrfach umgebogen werden. Die Umbiegungen können vorzugsweise hintereinander angeordnet sein. Gemäß einer Weiterbildung können jeweils zwei um etwa 180° gebogene Verläufe an jedem Klemmschenkel nacheinander vorgesehen sein. An die letzte Umbiegung kann sich dann die bereits erwähnte Wellenform anschließen. Dadurch wird die Gesamtlänge der Drahtformfeder durch die anfänglichen Umbiegungen erhöht. Durch das Erhöhen der Biegelänge bzw. der Verformungslänge der Drahtformfeder kann ebenfalls die Spreizkraft abgesenkt werden.

Eine weitere Ausführungsform der vorliegenden Erfindung kann vorsehen, dass die Einschiebeöffnung am Umfangsbereich des Verbindungselements eine schräge Auflagefläche aufweist. Auf diese Weise wird die Reibkraft zwischen der Halteklammer und der Verbindungsanordnung beim Aufspreizen der Klemmschenkel reduziert.

Die vorbeschriebene Arretierung und die damit verbundenen speziellen konstruktiven Ausgestaltungen der Halteklammer können auch bei der eingangs beschriebenen Verbindungsanordnung mit der kugelartigen Form des Verbindungselements zum Einsatz kommen. Es sind aber auch andere Einsatzbereiche beispielsweise bei starren Verbindungsanordnungen denkbar.

Nachfolgend wird die vorliegende Erfindung anhand der Zeichnungen näher erläutert. Es zeigen:
Fig. 1 eine dreidimensionale Ansicht einer möglichen Ausführungsform einer erfindungsgemäßen Verbindungsanordnung mit zwei Verbindungselemente;
Fig. 2 eine geschnittene Teilansicht der erfindungsgemäßen Verbindungsanordnung in einem nicht verbundenen Zustand der Verbindungselemente;
Fig. 3 eine geschnittene Ansicht der erfindungsgemäßen Verbindungsanordnung im verbundenen Zustand der Verbindungselemente;
Fig. 4 eine weitere geschnittene Ansicht der Verbindungsanordnung mit dem angedeuteten Bewegungsbereich bezogen auf die Verbindungsachse der Verbindungselemente;
Fig. 5 eine dreidimensionale Ansicht einer als Halteblech ausgebildeten Halteklammer zum axialen Arretieren der Verbindungselemente der erfindungsgemäßen Verbindungsanordnung;
Fig. 6 eine Seitenansicht einer weiteren Verbindungsanordnung mit einer erfindungsgemäß vorgeschlagenen Arretierung zum axialen Befestigen der Verbindungselemente;
Fig. 6a eine Seitenansicht einer ersten möglichen Ausführungsform einer als Drahtformfeder ausgebildeten Halteklammer;
Fig. 7 Vorderansicht der Verbindungsanordnung gemäß Fig. 6 mit der Halteklammer;
Fig. 7a eine Vorderansicht der ersten Ausführungsform der Halteklammer gemäß Fig. 6a;
Fig. 8 eine Draufsicht auf die Verbindungsanordnung gemäß Fig. 6;
Fig. 9 eine Seitenansicht der Verbindungsanordnung mit der Halteklammer gemäß der Figuren 6a mit einer zusätzlichen Verliersicherung für die Halteklammer;
Fig. 10 eine Draufsicht auf die Verbindungsanordnung gemäß Fig. 9;
Fig. 11 eine dreidimensionale Ansicht der Verbindungsanordnung gemäß der Figuren 9 und 10;
Fig. 12 eine Seitenansicht der Verbindungsanordnung mit einer zweiten Ausführungsform der Halteklammer;
Fig. 12a eine Seitenansicht zweiten Ausführungsform der Halteklammer gemäß Fig. 12;
Fig. 13 eine Vorderansicht der zweiten Ausführungsform der Halteklammer;
Fig. 14 eine Draufsicht auf die Verbindungsanordnung gemäß Fig. 12;
Fig. 14a eine Draufsicht auf die zweite Ausführungsform der Halteklammer;
Fig. 15 eine Seitenansicht der Verbindungsanordnung mit einer dritten Ausführungsform der Halteklammer;
Fig. 15a eine Seitenansicht dritten Ausführungsform der Halteklammer gemäß Fig. 15;
Fig. 16 eine Vorderansicht der dritten Ausführungsform der Halteklammer;
Fig. 17 eine Draufsicht auf die Verbindungsanordnung mit der Halteklammer gemäß Fig. 15a;
Fig. 18 eine Seitenansicht der Verbindungsanordnung mit einer vierten Ausführungsform der Halteklammer;
Fig. 19 eine Vorderansicht der vierten Ausführungsform der Halteklammer;
Fig. 20 eine dreidimensionale Ansicht der Verbindungsanordnung mit der Halteklammer gemäß Fig. 19;
Fig. 21 eine dreidimensionale Ansicht der Verbindungsanordnung mit einer fünften Ausführungsform der Halteklammer;
Fig. 22 eine Vorderansicht der fünften Ausführungsform der Halteklammer; und
Fig. 23 eine Vorderansicht der Verbindungsanordnung mit der fünften Ausführungsform der Halteklammer gemäß Fig. 21.

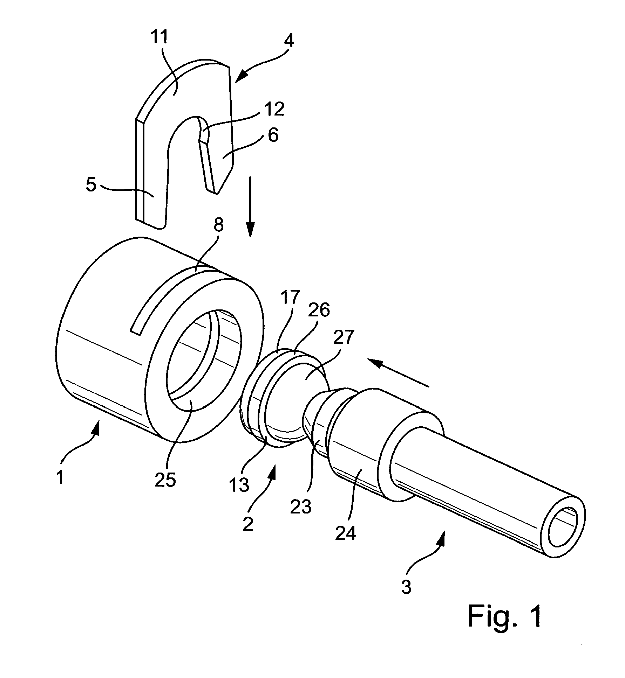

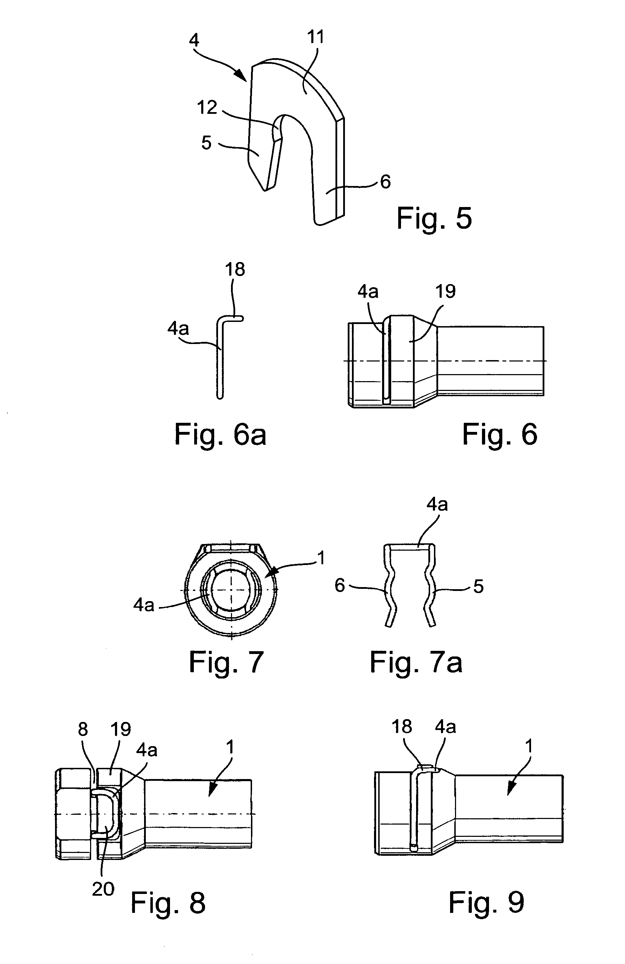

In den Figuren 1 bis 5 ist eine erfindungsgemäße Verbindungsanordnung mit einer Arretierung zum axialen Befestigen zweier Verbindungselemente 1, 2 gezeigt. Die Verbindungsanordnung zeichnet sich dadurch aus, dass sie auch nach der Verbindung der Verbindungselemente 1, 2 einen vorbestimmten Bewegungsbereich bezogen auf die Verbindungsachse 7 der Verbindungselemente 1, 2 ermöglicht. In den Figuren 6 bis 23 sind verschiedene Ausführungsformen einer Arretierung für eine Verbindungsanordnung gezeigt, wobei die dargestellten Ausführungsformen eine als Drahtformfeder ausgebildete Halteklammer betreffen und bei unterschiedlichen Arten von Verbindungsanordnungen verwendet werden können.

In Fig. 1 ist eine dreidimensionale Ansicht einer möglichen Ausführungsform der beweglichen Verbindungsanordnung gemäß der vorliegenden Erfindung dargestellt. Die hier gezeigte Ausführungsform der erfindungsgemäßen Verbindungsanordnung dient beispielhaft zum Verbinden einer Druckleitung mit einem nicht weiter dargestellten Geberzylinder eines hydraulischen Betätigungssystems für eine Kupplung. Es sind jedoch auch andere Einsatzmöglichkeiten der erfindungsgemäßen Verbindungsanordnung möglich.

Die Verbindungsanordnung umfasst das erste Verbindungselement 1 zum Aufnehmen des zweiten korrespondieren Verbindungselements 2, wobei das erste Verbindungselement 1 als Anschlussbuchse 25 eines nicht weiter dargestellten Hydraulikzylinders und das zweite Verbindungselement 2 als Anschlussstutzen 23 einer Druckleitung 3 ausgebildet ist. Ferner weist die erfindungsgemäße Verbindungsanordnung eine als Haltblech ausgebildete Halteklammer 4 zum axialen Befestigen der beiden Verbindungselemente 1, 2 auf. Die Halteklammer 4 weist zwei korrespondierende elastisch verformbare Klemmschenkel 5, 6 auf, die in eine auf die Verbindungsachse 7 der Verbindungselemente 1, 2 radial verlaufende Einschiebeöffnung 8 des ersten Verbindungselements 1 eingeschoben werden kann, um das in dem ersten Verbindungselement 1 aufgenommene zweite Verbindungselement 2 zumindest abschnittsweise zu hintergreifen. Dadurch werden die beiden Verbindungselemente 1, 2 bei der erfindungsgemäßen Verbindungsanordnung aneinander befestigt.

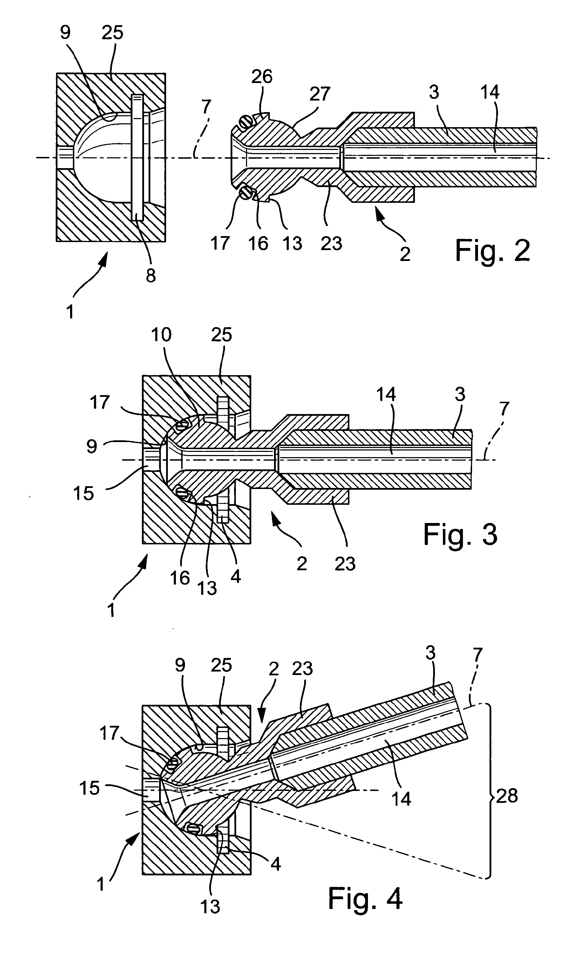

Erfindungsgemäß ist vorgesehen, dass die miteinander verbundenen Verbindungselemente 1, 2 jeweils einen bezogen auf die gemeinsame Verbindungsachse etwa kegelförmigen Bewegungsbereich 28 aufweisen, wie dies in Fig. 4 durch eine Klammer, welche die beiden den Bewegungsbereich 28 begrenzenden strichpunktierten Linien verbindet, angedeutet ist. Auf diese Weise wird eine bewegliche Verbindung zwischen den beiden Verbindungselementen 1, 2 realisiert, so dass eine Flexibilität hinsichtlich der Abmessungen und der Anordnungsmöglichkeiten bei der erfindungsgemäßen Verbindungsanordnung realisiert wird. In den Figuren 1 und 2 ist die vorgeschlagene Verbindungsanordnung in einem nicht verbundenen Zustand der Verbindungselemente 1, 2 dargestellt, wobei die Figuren 3 und 4 jeweils den verbundenen Zustand der Verbindungsanordnung zeigen.

Konstruktiv wird die bewegliche Verbindung gemäß einer möglichen Ausführungsform der vorliegenden Erfindung dadurch realisiert, dass das erste Verbindungselement 1 einen etwa als Gelenkpfanne 9 ausgebildeten Aufnahmebereich zum Aufnehmen des zweiten Verbindungselements 2 aufweist. Das zweite Verbindungselement 2 kann im Wesentlichen eine etwa kugelkopfartige Form 10 haben, die an die Form der Gelenkpfanne 9 angepasst ist. Infolgedessen kann das zweite Verbindungselement 2 mit seiner kugelkopfartigen Form 10 in der Gelenkpfanne 9 des ersten Verbindungselements formschlüssig aufgenommen werden. Um eine nahezu spielfreie Lagerung zu ermöglichen, ist der Radius der kugelkopfartigen Form 10 an den Innenradius der Gelenkpfanne 9 angepasst. Dies wird insbesondere aus den Figuren 3 und 4 deutlich.

Die kugelkopfartige Form 10 des zweiten Verbindungselements 2 kann auf der dem ersten Verbindungselement 1 abgewandten Seite einen zweiten Radius aufweisen, der kleiner ist als der erste Radius der kugelkopfartigen Form 10. Somit wird die kugelkopfartige Form des zweiten Verbindungselements 2 durch zwei Halbkugelabschnitte 26, 27 mit unterschiedlichen Durchmessern gebildet.

Zum Verbinden der beiden Verbindungselemente 1, 2 wird das zweite Verbindungselement 2, welches als Anschlussstutzen an der Druckleitung 3 befestigt ist, in Pfeilrichtung, wie in Fig. 1 dargestellt, in die Gelenkpfanne 9 des ersten Verbindungselements 1 als Anschlussbuchse geführt. Nachdem die kugelkopfartige Form 10 in der Gelenkpfanne 9 des ersten Verbindungselements 1 aufgenommen ist, wird die Halteklammer 4 in Pfeilrichtung, wie in Fig. 1 dargestellt, in die Einschiebeöffnung 8 mit ihren Klemmschenkeln 5, 6 geführt.

Zum axialen Fixieren der Verbindungselemente 1, 2 weist die Halteklammer 4 eine Basis 11 auf, an der die Klemmschenkel 5, 6 angeformt sind, wie dies in Fig. 5 dargestellt ist. Zwischen den Klemmschenkeln 5, 6 und der Basis 11 wird eine etwa kreisförmige Ausnehmung 12 gebildet, deren Durchmesser etwa dem zweiten Radius der kugelkopfartigen Form 10 des zweiten Verbindungselements 2 entspricht. Beim radialen Einschieben der Halteklammer 4 in die Einschiebeöffnung 8 kann die kugelkopfartige Form 10 im Bereich des zweiten Radius zumindest teilweise von dem Rand der Ausnehmung 12 umschlossen werden. Folglich kann die Halteklammer 4, wie in Fig. 3 gezeigt, an der Umfangsform im Bereich des zweiten Radius der kugelkopfartigen Form 10 des zweiten Verbindungselements 2 anliegen und andererseits mit ihren Klemmschenkeln 5, 6 in der Einschiebeöffnung 8 des ersten Verbindungselements 1 gehalten werden.

Wie insbesondere auch aus Fig. 4 ersichtlich ist, kann auf diese Art und Weise eine bewegliche Verbindung zwischen den Verbindungselementen 1 und 2 im verbundenen Zustand realisiert werden. Bezogen auf die Verbindungsachse 7 kann ein etwa kegelförmiger Bewegungsbereich 28 der Verbindungselemente 1,2 bei der erfindungsgemäßen Verbindungsanordnung realisiert werden, wie durch die strichpunktierten Linien in Fig. 4 angedeutet ist. Dieser Bewegungsbereich der miteinander verbundenen Verbindungselemente 1, 2 der erfindungsgemäßen Verbindungsanordnung wird durch einen Durchmesserabsatz 13 zwischen den beiden Radien an der kugelkopfartigen Form 10 des zweiten Verbindungselements 2 als Anschlag begrenzt. Der Durchmesserabsatz 13 wirkt derart mit der Halteklammer 4 zusammen, dass gerade der in Fig. 4 angedeutete Bewegungsbereich zwischen den Verbindungselementen 1, 2 ermöglicht wird.

Bei dieser gezeigten Ausführungsform der Erfindung, bei der die Verbindungsanordnung als Verbindung zwischen einem Geberzylinder und einer Druckleitung 3 verwendet wird, weisen sowohl das erste Verbindungselement 1 als Anschlussbuchse 25 eine Anschlussbohrung 15 als auch das zweite Verbindungselement 2 als Anschlussstutzen 23 eine Durchgangsbohrung 14 zum Fluidtransport auf. Der Anschlussstutzen 23 weist einen Grundkörper 24 auf, der mit der Druckleitung 3 verbunden ist. Am freien Ende des Grundkörpers 24 ist die kugelkopfartigen Form 10 des zweiten Verbindungselements 2 vorgesehen, wobei die Durchgangsbohrung 14 in diesem Bereich entsprechend aufgeweitet ist, so dass bei jeder Stellung entlang des Bewegungsbereiches ein Fluidtransport durch die Verbindungsanordnung sichergestellt ist.

Um bei dieser Ausführungsform eine ausreichende Abdichtung zwischen den beiden Verbindungselementen 1, 2 der erfindungsgemäßen Verbindungsanordnung zu realisieren, kann die kugelkopfartige Form 10 des zweiten Verbindungselements 2 im Bereich des ersten Radius eine umlaufende Nut 16 oder dergleichen aufweisen, in der ein als O-Ring 17 ausgebildetes Dichtelement vorgesehen ist, um die Verbindung zwischen den beiden Verbindungselementen 1, 2 ausreichend abzudichten. Der Durchmesser des O-Ringes 17 ist so gewählt, dass dieser geringfügig größer als die Tiefe der Nut 16 ist, so dass der O-Ring 17, wie in den Figuren 3 und 4 angedeutet, unter einer gewissen Vorspannung steht, wodurch eine ausreichende Abdichtung im verbundenen Zustand der Verbindungselemente 1, 2 ermöglicht wird.

In Fig. 5 ist eine Ansicht der Halteklammer 4 mit ihren Klemmschenkeln 5, 6 gezeigt. Aus dieser Ansicht wird die im Wesentlichen kreisförmige Gestalt der Ausnehmung 12 deutlich, die zwischen der Basis 11 und den beiden Klemmschenkeln 5, 6 gebildet wird. Der Rand 18 der Ausnehmung 12 weist einen vorbestimmten Radius auf, der an die Umfangsform im Bereich des zweiten Radius der kugelkopfartigen Form 10 des zweiten Verbindungselements 2 angepasst ist, um die entsprechende Begrenzung des Bewegungsbereiches zwischen den beiden Verbindungselementen 1, 2 zu realisieren, wie bereits oben beschrieben worden ist.

Eine andere nicht weiter dargestellte Ausführungsform der vorliegenden Erfindung betrifft eine Kolben-Kolbenstangen-Verbindung. Diese Ausführungsform ist in den Figuren nicht dargestellt, da diese Ausführung im Wesentlichen dieselben erfindungsgemäßen Merkmale aufweist, wie sie bereits in den Figuren 1 bis 5 gezeigt sind. Bei dieser Ausführungsform wird die Verbindungsanordnung als Verbindung zwischen einem Kolben und einer Kolbenstange eines Arbeitszylinders einer Brennkraftmaschine verwendet. Da an die Verbindung zwischen dem Kolben und der Kolbenstange bestimmte Bedingungen hinsichtlich des Bewegungsbereiches gestellt sind, wäre der Einsatz der vorbeschriebenen Verbindungsanordnung besonders vorteilhaft, da diese Verbindungsanordnung die geforderten Freiheitsgrade bei dem Bewegungsbereich ermöglicht.

In den Figuren 6 bis 23 ist eine andere Art der Verbindungsanordnung zum Verbinden der beiden Verbindungselemente 1, 2 gezeigt. Die dort dargestellte Verbindungsanordnung ist lediglich beispielhaft ausgewählt worden, um die verschiedenen Ausführungsformen der Arretierung zwischen den beiden Verbindungselementen 1, 2 zu verdeutlichen. Somit ist es ebenfalls möglich, die verschiedenen Ausführungsformen der Arretierung bei der vorbeschriebenen Verbindungsanordnung oder auch bei anderen Verbindungsanordnungen einzusetzen. Die verschiedenen Ausführungsformen der Arretierung haben gemeinsam, dass als Halteklammer 4a, 4b, 4c, 4d, 4e eine Drahtformfeder als reines Biegeelement verwendet wird.

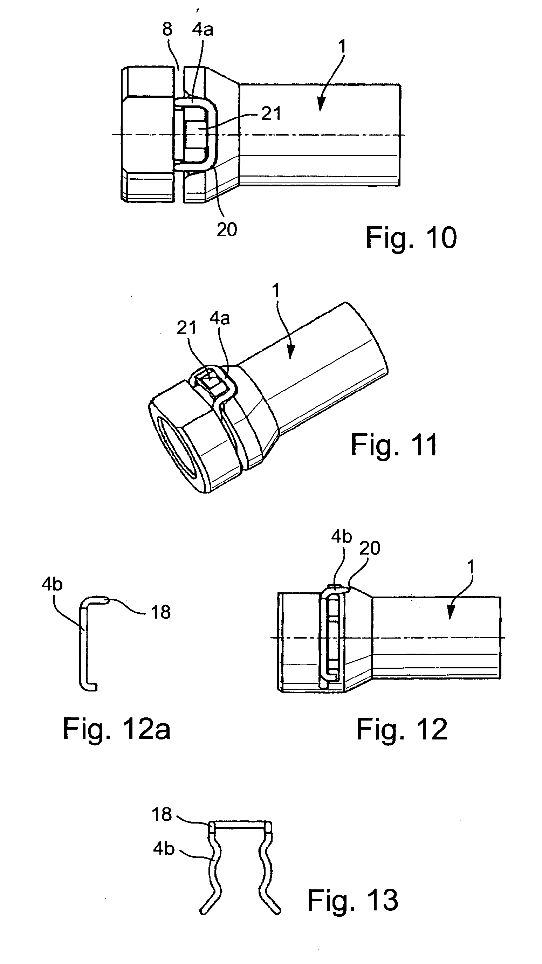

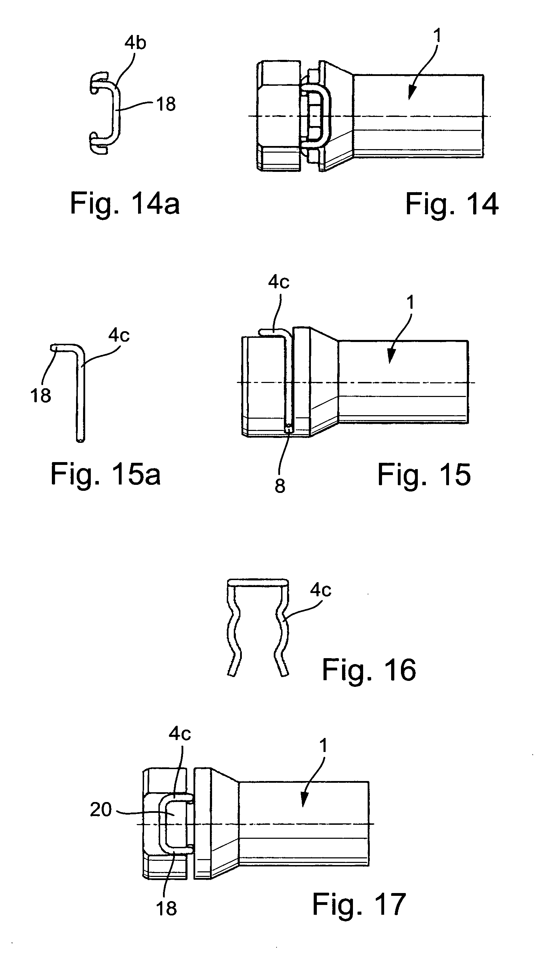

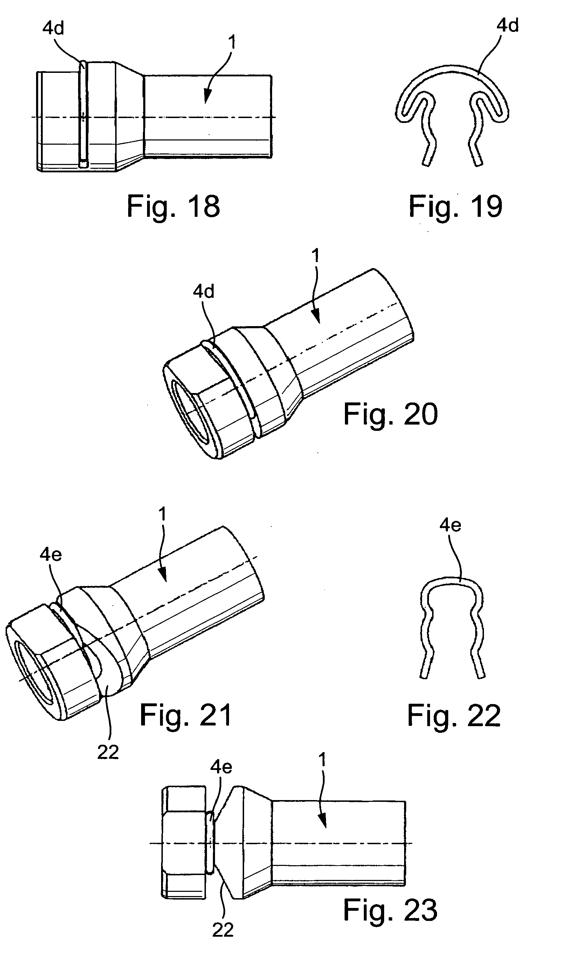

Die Figuren 6 bis 8 zeigen verschiedene Ansichten einer ersten Ausführungsform einer als Halteklammer 4a als Arretierung an einer starren Verbindungsanordnung. Die Figuren 9 bis 11 zeigen ebenfalls Ansichten der Verbindungsanordnung mit der ersten Ausführungsform der Halteklammer 4a, jedoch einer Ausführung zu vereinfachten Entnahme der Halteklammer 4a. Die Figuren 12 bis 14a zeigen Ansichten der Verbindungsanordnung gemäß einer zweiten Ausführungsform der Halteklammer 4b. Die Figuren 15 bis 17 zeigen weitere Ansichten der Verbindungsanordnung gemäß einer dritten Ausführungsform der Halteklammer 4c. Schließlich zeigen die Figuren 18 bis 20 Ansichten der Verbindungsanordnung einer vierten Ausführungsform der Halteklammer 4d und die Figuren 21 bis 23 Ansichten der Verbindungsanordnung gemäß einer fünften Ausführungsform der Halteklammer 4e.

Im Gegensatz zu der Ausführung der Halteklammer 4 bei der vorbeschriebenen Verbindungsanordnung gemäß der Figuren 1 bis 5 unterscheiden sich die weiteren erfindungsgemäßen Ausführungsformen dadurch, dass die Verformungslänge der als Drahtformfeder ausgebildeten Halteklammer 4a, 4b, 4c, 4d, 4e verlängert wird, um dadurch die erforderliche Spreizkraft und die Montagekraft der Halteklammer 4a, 4b, 4c, 4d, 4e zu verringern.

Die erfindungsgemäße Arretierung zum Verbinden von Verbindungselementen 1, 2 der Verbindungsanordnung umfasst demnach eine als Drahtformfeder ausgebildete Halteklammer 4a, 4b, 4c, 4d, 4e mit zwei korrespondierenden elastisch verformbaren Klemmschenkeln 5, 6, die in eine bezogen auf die Verbindungsachse 7 radial verlaufende Einschiebeöffnung 8 einschiebbar ist, um das in dem ersten Verbindungselement 1 aufgenommene zweite Verbindungselement 2 zum axialen Fixieren zumindest abschnittsweise zu hintergreifen.

Gemäß der ersten drei Ausführungsformen der als Drahtformfeder ausgebildeten Halteklammer 4a, 4b, 4c wird dies dadurch erreicht, dass ein torsionsbelasteter Verformungsanteil bei der Drahtformfeder realisiert wird. Dies kann dadurch erreicht werden, dass ein den Klemmschenkeln 5, 6 abgewandter Endbereich 18 der Halteklammern 4a, 4b, 4c entsprechend abgewinkelt ist. Durch das Abknicken bzw. Abwinkeln des Endbereiches 18 der Halteklammern 4a, 4b, 4c wird die Spreizkraft zum Auseinanderspreizen der korrespondierenden Klemmschenkel 5, 6 auf ein erforderliches Maß abgesenkt.

Bei den Halteklammern 4a, 4b, 4c ist der Endbereich 18 jeweils in einem rechten Winkel abgewinkelt. Durch das Abbiegen des Endbereiches 18 wird gleichzeitig auch ermöglicht, dass die Halteklammer 4a, 4b, 4c nicht über den Umfang des ersten Verbindungselements 1 der Verbindungsanordnung hinausragt. Um dies zu ermöglichen, ist an den Umfangsbereich des ersten Verbindungselements 1 ein Gehäuseaufbau 19 vorgesehen, wie in den Figuren 6 bis 8 gezeigt. Der Gehäuseaufbau 19 weist eine Vertiefung 20 auf, in die der Endbereich 18 der Halteklammer 4a versenkt ist. Eine andere Möglichkeit, den abgewinkelten Endbereich 18 der Halteklammer 4a aufzunehmen, ist in den Figuren 9 bis 11 gezeigt. Dort wird der abgewinkelte Endbereich 18 in der am Umfang des ersten Verbindungselements 1 vorgesehenen Vertiefung 20 vorgesehen. Die Vertiefung 20 ist etwa U-förmig als Nut ausgebildet und an die Form des abgewinkelten Endbereiches 18 angepasst.

Insbesondere aus den Figuren 10 und 11 ist ersichtlich, dass eine Aussparung 21 im Bereich der Vertiefung 20 vorgesehen ist, um die Entnahme der Halteklammer 4a zu vereinfachen. Die Klemmschenkel 5, 6 der Halteklammer 4a sind an die Umfangsform des zu hintergreifenden, zweiten Verbindungselements 2 angepasst. Bei der ersten Ausführungsform der Halteklammer 4a sind die Klemmschenkel 5, 6 etwa wellenförmig ausgebildet, wobei die freien Enden der Klemmschenkel 5, 6 einander abgewandt abgewinkelt sind.

Eine zweite Ausführungsform der Halteklammer 4b ist in den Figuren 12 bis 14 gezeigt. Wie aus den Figuren 12 und 14 ersichtlich ist, wird auch bei der zweiten Ausführungsform der Halteklammer 4b ebenfalls eine Vertiefung 20 am Umfang des ersten Verbindungselements 1 vorgesehen, um in der Vertiefung 20 den Endbereich 18 aufzunehmen. Im Unterschied zur ersten Ausführungsform der Halteklammer 4a ist bei der zweiten Ausführungsform der Halteklammer 4b vorgesehen, dass die freien Enden der Klemmschenkel 5, 6 derart abgewinkelt sind, dass sie etwa parallel zu dem abgewinkelten Endbereich 18 verlaufen, wie dies insbesondere aus Fig. 12a und 14a ersichtlich ist. Auch bei der zweiten Ausführungsform der Halteklammer 4b ist eine Aussparung 21 im Bereich der Vertiefung 20 vorgesehen, um eine erleichterte Entnahme der Halteklammer 4b zu ermöglichen.

Eine dritte Ausführungsform der Halteklammer 4c ist in den Figuren 15 bis 17 dargestellt. Im Gegensatz zu den vorbeschriebenen Ausführungsformen der Halteklammer 4a und 4b ist bei dieser Halteklammer 4c vorgesehen, dass der Endbereich 18 derart abgewinkelt ist, dass der Endbereich 18 in einer dem zweiten Verbindungselement 2 zugewandten Seite vorgesehenen Vertiefung 20 eingebettet ist. Bei dieser dritten Ausführungsform der Halteklammer 4c ist keine Verliersicherung der Halteklammer 4c vorgesehen. Die Form der Halteklammer 4c ist ähnlich gewählt, wie die Form der ersten Ausführungsform der Halteklammer 4a.

Eine vierte Ausführungsform der Halteklammer 4d ist in den Figuren 18 bis 20 dargestellt. Bei dieser Ausführungsform der Halteklammer 4d wird eine verlängerte Biegelänge der Halteklammer 4d vorgesehen. Dies wird durch die spezielle Form der Halteklammer 4d erreicht, bei der eine doppelte Umbiegung am Umfang vorgesehen ist, um die Spreizkraft bei dieser Ausführungsform der Halteklammer 4d zu reduzieren. Die Umbiegungen sind hintereinander angeordnet und weisen jeweils einen Biegeverlauf von etwa 180° auf. Nach der zweiten Umbiegung ergibt sich der bereits beschriebene Wellenverlauf. Durch die engen Umbiegungen ist das Umschließen des Umfanges des zweiten Verbindungselementes 2 in der Einschiebeöffnung 8 sichergestellt.

Schließlich wird in den Figuren 21 bis 23 eine fünfte Ausführungsform der Halteklammer 4e gezeigt. Bei dieser speziellen Form der Halteklammer 4e wird eine Reduzierung der Reibkraft beim Aufspreizen der Halteklammer 4e realisiert. Dies wird durch eine schräg verlaufende Auflagefläche 22 an dem der Einschiebeöffnung 8 benachbarten Umfangsbereich des ersten Verbindungselements 1 vorgesehen. Diese schräge Auflagefläche 22 ist insbesondere aus Fig. 21 und 22 ersichtlich. Die Form der Halteklammer 4e ist, wie insbesondere aus Fig. 22 ersichtlich ist, ähnlich der Form der ersten Ausführungsform der Halteklammer 4a mit dem Unterschied, dass der Endbereich 18 der Halteklammer 4e nicht abgewinkelt ist.

### Bezugszeichenliste

- 1: erstes Verbindungselement
- 2: zweites Verbindungselement
- 3: Druckleitung
- 4: Halteklammer
- 4a,4b,4c,4d,4e: Halteklammer
- 5, 6: Klemmschenkel
- 7: Verbindungsachse
- 8: Einschiebeöffnung
- 9: Gelenkpfanne
- 10: kugelkopfartige Form
- 11: Basis
- 12: Ausnehmung
- 13: Durchmesserabsatz
- 14: Durchgangsbohrung
- 15: Anschlussbohrung
- 16: Nut
- 17: O-Ring
- 18: Endbereich
- 19: Gehäuseaufbau
- 20: Vertiefung
- 21: Aussparung
- 22: Auflagefläche
- 23: Anschlussstutzen
- 24: Grundkörper
- 25: Anschlussbuchse
- 26, 27: Halbkugelabschnitte
- 28: kegelförmiger Bewegungsbereich

## Patentansprüche

1. Verbindungsanordnung, mit zumindest einem ersten Verbindungselement (1) zum Aufnehmen zumindest eines zweiten korrespondierenden Verbindungselements (2) und mit einer Arretierung zum Befestigen der beiden Verbindungselemente (1, 2), **dadurch gekennzeichnet, dass** die miteinander verbundenen Verbindungselemente (1, 2) jeweils einen bezogen auf die gemeinsame Verbindungsachse (7) etwa kegelförmigen Bewegungsbereich (28) aufweisen.

2. Verbindungsanordnung nach Anspruch 1, **dadurch gekennzeichnet, dass** das erste Verbindungselement (1) einen etwa als Gelenkpfanne (9) ausgebildeten Aufnahmebereich für das zweite Verbindungselement (2) umfasst, und dass das zweite Verbindungselement (2) im Wesentlichen eine an die Gelenkpfanne (9) angepasste etwa kugelkopfartige Form (10) aufweist.

3. Verbindungsanordnung nach Anspruch 2, **dadurch gekennzeichnet, dass** die kugelkopfartige Form (10) zumindest einem ersten vorbestimmten Radius aufweist, der an den Innenradius der Gelenkpfanne (9) angepasst ist.

4. Verbindungsanordnung nach Anspruch 3, **dadurch gekennzeichnet, dass** die kugelkopfartige Form (10) zumindest einen zweiten Radius aufweist, der zumindest geringfügig kleiner als der erste Radius ist.

5. Verbindungsanordnung nach Anspruch 4, **dadurch gekennzeichnet, dass** die kugelkopfartige Form (10) durch zwei aneinander liegende im Wesentlichen Halbkugelabschnitte (26, 27) mit unterschiedlichen Radien gebildet ist.

6. Verbindungsanordnung nach Anspruch 5, **dadurch gekennzeichnet, dass** ein Durchmesserabsatz (13) an der kugelkopfartige Form (10) zwischen dem ersten Radius und dem zweiten Radius als umlaufender Anschlag zum Begrenzen des Bewegungsbereiches der verbundenen Verbindungselemente (1, 2) ausgebildet ist.

7. Verbindungsanordnung nach Anspruch 1, **dadurch gekennzeichnet, dass** das zweite Verbindungselement (2) als Anschlussstutzen (23) einer Druckleitung (3) ausgebildet ist.

8. Verbindungsanordnung nach Anspruch 7, **dadurch gekennzeichnet, dass** der Anschlussstutzen (23) einen mit der Druckleitung (3) verbundenen Grundkörper (24) mit einer Durchgangsbohrung (14) zum Fluidtransport umfasst, wobei der Grundkörper (24) an seinem freien Ende eine kugelkopfartige Form (10) aufweist.

9. Verbindungsanordnung nach Anspruch 8, **dadurch gekennzeichnet, dass** das erste Verbindungselement (1) als Anschlussbuchse (25) eines Hydraulikzylinders ausgebildet ist, die mit der kugelkopfartige Form (10) des Anschlussstutzens (23) verbindbar ist.

10. Verbindungsanordnung nach Anspruch 9, **dadurch gekennzeichnet, dass** die Anschlussbuchse (25) eine Anschlussbohrung (15) zum Fluidtransport aufweist.

11. Verbindungsanordnung nach Anspruch 8, **dadurch gekennzeichnet, dass** die kugelkopfartige Form (10) eine umlaufende Nut (16) zur Aufnahme eines Dichtungselements aufweist.

12. Verbindungsanordnung nach Anspruch 1, **dadurch gekennzeichnet, dass** sie als Verbindung zwischen einem Kolben und einer Kolbenstange eines Arbeitszylinders einer Brennkraftmaschine verwendbar ist.

13. Verbindungsanordnung nach Anspruch 1, **dadurch gekennzeichnet, dass** als Arretierung eine als Halteblech ausgebildeten Halteklammer (4) zur axialen Befestigung der Verbindungselemente (1, 2) vorgesehen ist.

14. Verbindungsanordnung nach Anspruch 13, **dadurch gekennzeichnet, dass** die Halteklammer (4) in einer bezogen auf die Verbindungsachse (7) radial verlaufenden Einschiebeöffnung (8) des ersten Verbindungselements (1) einschiebbar ist.

15. Verbindungsanordnung nach Anspruch 13, **dadurch gekennzeichnet, dass** die Halteklammer (4) eine Basis (11) umfasst, an die zwei korrespondierende Klemmschenkel (5, 6) angeformt sind.

16. Verbindungsanordnung nach Anspruch 15, **dadurch gekennzeichnet, dass** zwischen der Basis (11) und den Klemmschenkeln (5, 6) eine im Wesentlichen kreisförmige Ausnehmung (12) vorgesehen ist.

17. Verbindungsanordnung nach Anspruch 16, **dadurch gekennzeichnet, dass** der Durchmesser der Ausnehmung (12) an die Umfangsform der kugelkopfartigen Form (10) angepasst ist.

18. Verbindungsanordnung nach Anspruch 16, **dadurch gekennzeichnet, dass** der Rand der Ausnehmung (12) mit einem vorbestimmten Radius versehen ist.

19. Verbindungsanordnung nach Anspruch 18, **dadurch gekennzeichnet, dass** der Radius des Randes an den zugeordneten Radius der kugelartigen Form (10) des zweiten Verbindungselements (2) angepasst ist.

20. Verbindungsanordnung nach Anspruch 19, **dadurch gekennzeichnet, dass** der Bewegungsbereich der verbundenen Verbindungselemente (1, 2) durch den Rand der Ausnehmung (12) und den umlaufenden Durchmesserabsatz (13) als Anschlag begrenzt ist.

21. Arretierung zum Befestigen von Verbindungselementen einer Verbindungsanordnung, insbesondere einer Verbindungsanordnung nach einem der Ansprüche 1 bis 12, mit einer Halteklammer mit zwei korrespondierenden elastisch verformbaren Klemmschenkeln, die in eine bezogen auf die Verbindungsachse radial verlaufende Einschieböffnung des ersten Verbindungselements einschiebbar sind, um das in dem ersten Verbindungselement aufgenommene zweite Verbindungselement zum axialen Fixieren zumindest abschnittsweise zu hintergreifen, **dadurch gekennzeichnet, dass** die Halteklammer (4a, 4b, 4c, 4d, 4e) als Drahtformfeder ausgebildet ist und derart geformt ist, dass eine möglichst geringe Kraft zum Spreizen der Klemmschenkel (5, 6) erforderlich ist.

22. Arretierung nach Anspruch 21, **dadurch gekennzeichnet, dass** der den Klemmschenkeln (5, 6) abgewandte Endbereich (18) der Halteklammer (4a, 4b, 4c) abgewinkelt ist.

23. Arretierung nach Anspruch 22, **dadurch gekennzeichnet, dass** der Endbereich (18) rechtwinklig abgewinkelt ist.

24. Arretierung nach Anspruch 22, **dadurch gekennzeichnet, dass** der abgewinkelte Endbereich (18) im eingeschobenen Zustand der Halteklammer (4a) in einer Vertiefung (20) eines Gehäuseaufbaus (19) am Umfang des ersten Verbindungselements (1) vorgesehen ist.

25. Arretierung nach Anspruch 22, **dadurch gekennzeichnet, dass** der abgewinkelte Endbereich (18) im eingeschobenen Zustand der Halteklammer (4a) in einer Vertiefung (20) am Umfang des ersten Verbindungselements (1) vorgesehen ist.

26. Arretierung nach Anspruch 25, **dadurch gekennzeichnet, dass** die Vertiefung (20) am Umfang des ersten Verbindungselements (1) der Einschieböffnung (8) benachbart ist.

27. Arretierung nach Anspruch 24, **dadurch gekennzeichnet, dass** die Vertiefung (20) als an die Form des Endbereiches (18) angepasste etwa U-förmig verlaufende Nut ausgebildet ist.

28. Arretierung nach Anspruch 23, **dadurch gekennzeichnet, dass** eine Aussparung (21) zur Halteklammerentnahme am benachbarten Bereich der Vertiefung (20) vorgesehen ist.

29. Arretierung nach Anspruch 21, **dadurch gekennzeichnet, dass** die Klemmschenkel (5, 6) der Halteklammer (4a, 4b, 4,c, 4d, 4e) an die Umfangsform des zweiten, zu befestigenden Verbindungselement (2) angeformt sind.

30. Arretierung nach Anspruch 29, **dadurch gekennzeichnet, dass** die Klemmschenkel (5, 6) etwa wellenförmig ausgebildet sind.

31. Arretierung nach Anspruch 21, **dadurch gekennzeichnet, dass** das freie Ende jedes Klemmschenkels (5, 6) abgewinkelt sind.

32. Arretierung nach Anspruch 31, **dadurch gekennzeichnet, dass** die freien Enden der Klemmschenkel (5, 6) in einem rechten Winkel abgewinkelt sind.

33. Arretierung nach Anspruch 32, **dadurch gekennzeichnet, dass** die abgewinkelten freien Enden etwa parallel zu dem abgewinkelten Endbereich (18) der Halteklammer (4b) ausgerichtet sind.

34. Arretierung nach Anspruch 33, **dadurch gekennzeichnet, dass** die freien Enden der Halteklammer (4a, 4b, 4,c, 4d, 4e) einander abgewandt sind.

35. Arretierung nach Anspruch 21, **dadurch gekennzeichnet, dass** die Klemmschenkel (5, 6) der Halteklammer (4d, 4e) mehrere nacheinander verlaufende Umbiegungen aufweisen.

36. Arretierung nach Anspruch 35, **dadurch gekennzeichnet, dass** jede Umbiegung einen Biegeverlauf von etwa 180 ° aufweist.

37. Arretierung nach Anspruch 35, **dadurch gekennzeichnet, dass** am Umfang des ersten Verbindungselements (1) zumindest eine schräg verlaufende Auflagefläche (22) zum Reduzieren der Reibkraft beim Einschieben der Halteklammer (4e) vorgesehen ist.

38. Arretierung nach Anspruch 37, **dadurch gekennzeichnet, dass** die Auflagefläche (22) der Einschiebeöffnung (8) zugeordnet ist.
